**Europäisches Patentamt**

**European Patent Office**

**Office européen des brevets**

(19)

(11) Veröffentlichungsnummer : **0 448 516 A1**

(12)

# EUROPÄISCHE PATENTANMELDUNG

(21) Anmeldenummer : 91810172.6

(22) Anmeldetag : 15.03.91

(51) Int. Cl.⁵ : **C09J 133/00, C09J 123/04**

(30) Priorität : 23.03.90 GB 9006537

(43) Veröffentlichungstag der Anmeldung :
25.09.91 Patentblatt 91/39

(84) Benannte Vertragsstaaten :
AT BE CH DE ES FR GB IT LI NL SE

(71) Anmelder : CIBA-GEIGY AG
Klybeckstrasse 141
CH-4002 Basel (CH)

(72) Erfinder : Andrews, Christopher Michael
192 Vinery Road
Cambridge CB1 3DS (GB)

(74) Vertreter : Sharman, Thomas et al
c/o CIBA-GEIGY PLC Patents Department
Tenax Road Trafford Park
Manchester M17 1WT (GB)

(54) Klebstoffzusammensetzung.

(57) Klebstoffzusammensetzung, geeignet zum Verkleben von zwei oder mehreren Substraten, von denen mindestens eines für UV-Strahlen durchlässig ist, enthaltend
(A) ein filmbildendes Copolymer aus einem Olefin und einem polaren Monomer,
(B) ein photopolymerisierbares monomeres Acrylat und
(C) einen Photoinitiator für die Acrylatgruppen,
wobei die Zusammensetzung lichtdurchlässig ist und sich durch teilweisige Unverträglichkeit zwischen den Komponenten (A) und (B) auszeichnet.

EP 0 448 516 A1

# KLEBSTOFFZUSAMMENSETZUNG

Die vorliegende Erfindung betrifft eine Klebstoffzusammensetzung, die zum Laminieren von Substraten geeignet ist.

Thermoplastische Polyvinylharze werden als Zwischenschicht bei Laminaten verwendet, besonders Glaslaminaten, wie beispielsweise Autofenstern oder Windschutzscheiben. Solche thermoplastischen Harze haben aber verschiedene Nachteile, wie beispielsweise muss die Verklebung der Substrate oberhalb des Erweichungspunktes der Harze bewirkt werden, die Substrate können sich dabei verschieben oder es können sich infolge des Erhitzens Luftbläschen im Harz bilden. Ausserdem verschlechtert sich das Harzpulver mit der Zeit durch Aufnahme von Luftfeuchtigkeit.

Im US-Patent 4,317,862 wird ein Glaslaminat beschrieben, enthaltend zwischen den Glasplatten eine Zwischenschicht aus einem photoempfindlichen Harz, welches im wesentlichen aus einem Gemisch aus (a) einem Hochpolymeren mit Acryloyloxy- oder Methacryloyloxygruppen der Formel
$CH_2 = C(R)-COO-$,
$CH_2 = C(R)-COO-(CH_2)_n-O-$ oder
$CH_2 = C(R)-COO-[(CH_2)_m-O-]_1-$,
worin R für Wasserstoff oder Methyl steht, n = 2, 3, 4 oder 5 ist und m = 1, 2, 3 oder 4 ist und 1 eine Zahl von 1 bis 30 bedeutet, und (b) Acrylsäure, Methacrylsäure oder Derivate davon besteht. Vorteile solcher Laminate über Laminate auf Basis von Polyvinylbutyralharze sind zum Beispiel, dass das Harzgemisch nicht, bevor es bestrahlt wird, härtet, so dass die Glasplatten vor der Bestrahlung noch mal entfernt werden können, falls Fremdkörper oder Luftblasen im Harz enthalten sind, und dass das Harzgemisch über lange Zeit seine Haftfestigkeit behält, auch wenn Wasser in das Harz eintritt.

Das im Gemisch des US-Patentes 4,317,862 enthaltene Hochpolymere und Monomere, welche die Zwischenschicht im Laminat darstellen, bilden bei Bestrahlung untereinander primäre Bindungen aus, so dass eine homogene Schicht vorliegt.

Es wurde gefunden, dass bei Verwendung eines inhomogenen Laminierharzes enthaltend (A) ein filmbildendes Copolymer aus Olefin und einem polaren Monomer und (B) ein photopolymerisierbares Monomer, Harze erhalten werden, worin die Komponenten (A) und (B) ausreichend unverträglich sind, so dass eine Komponente die Oberfläche des Substrats befeuchtet. Dadurch weist das Harz bis zur Bestrahlung eine geringe Haftfestigkeit zur Oberfläche des Substrates auf, wobei die Vorteile eines Laminierharzes erhalten bleiben, wie beispielsweise das Entfernen von Fremdkörpern oder Luftblasen oder Berichtigung der Lage einzelner Substrate im Laminat. Ausserdem wird durch das Befeuchtung der Substratoberfläche eine ausgezeichnete Haftung zwischen Harz und Substrat erhalten.

Die vorliegende Erfindung betrifft somit eine Klebstoffzusammensetzung, geeignet zum Verkleben von zwei oder mehreren Substraten, von denen mindestens eines für UV-Strahlen durchlässig ist, enthaltend

(A) ein filmbildendes Copolymer aus einem Olefin und einem polaren Monomer,

(B) ein photopolymerisierbares monomeres Acrylat und

(C) einen Photoinitiator für die Acrylatgruppen, wobei die Zusammensetzung lichtdurchlässig ist und sich durch teilweise Unverträglichkeit zwischen den Komponenten (A) und (B) auszeichnet.

Die vorliegende Erfindung betrifft Laminate aus zwei oder mehreren Substraten, enthaltend zwischen den übereinander oder nebeneinander liegenden Substraten eine Schicht einer erfindungsgemässen Klebstoffzusammensetzung.

Ausserdem umfasst die Erfindung auch Laminate aus zwei oder mehreren Substraten, enthaltend zwischen den übereinander oder nebeneinander liegenden Substraten eine durch Bestrahlung mit UV-Licht photopolymerisierte erfindungsgemässe Klebstoffzusammensetzung.

Das Copolymere (A) besteht vorzugsweise aus einem linearen oder verzweigten Olefin, insbesondere Ethylen, und einem polaren Monomer, wie Vinylacetat, Acrylsäure oder deren Alkylester mit vorzugsweise 1-4 C-Atomen in der Alkylgruppe. Die betreffenden Mengen bezüglich des Olefins und des polaren Monomers werden so gewählt, dass ein lichtdurchlässiges Copolymer erhalten wird. Vorzugsweise beträgt das Verhältnis von Olefin zu polarem Monomer 95:5 bis 20:80 Gewichtsteile, insbesondere 95:5 bis 50:50 Gewichtsteile.

Ein bevorzugtes Copolymer (A) ist ein Ethylen/Vinylacetat-Copolymer, das im Handel unter der Bezeichnung ELVAX® von DuPont erhältlich ist. Andere geeignete bevorzugte Copolymere (A) sind solche aus Ethylen und Ethylacrylat und ausserdem Terpolymere aus Ethylen, Vinylacetat und Acrylsäure.

Die Menge der filmbildenden Copolymeren (A) in der erfindungsgemässen Klebstoffzusammensetzung beträgt 1 bis 95 Gew.-%, vorzugsweise 20 bis 80 Gew.-%, bezogen auf die gesamte Klebstoffzusammensetzung.

Das photopolymerisierbare Acrylat (B) kann ein Monoacrylat sein, das eine Acryloyloxy- oder Methacryloyloxygruppe und eine Hydroxyl- oder Carboxylgruppe im Molekül enthält, ein Acrylat sein enthaltend durchschnittlich mehr als eine Acryloyloxy- oder Methacryloylgruppe im Molekül oder ist ein Gemisch aus zwei oder mehreren solcher Acrylate.

Bevorzugte Monoacrylate als Komponente (B) sind Hydroxyalkylacrylate und Hydroxyalkylmethacrylate, vorzugsweise solche mit 1-4 C-Atomen in der Alkylgruppe, wie 2-Hydroxyethylacrylat, 2-Hydroxypropylacrylat, 3-Hydroxypropylacrylat, 4-Hydroxybutylacrylat, die entsprechenden Methacrylate und Gemische aus zwei oder mehreren solcher Acrylate, Carboxyalkylacrylate und Carboxyalkylmethacrylate, vorzugsweise solche mit 1-4 C-Atomen in der Alkylgruppe, wie 2-Carboxyethylacrylat (welches im Handel erhältlich ist und durch Dimerisation von Acrylsäure, enthaltend 10 Gew.-% höhere Oligomere der Acrylsäure, herstellbar ist), 2-Carboxy-2-methylethylmethacrylat, welches durch Dimerisation von Methacrylsäure erhältlich ist, und carboxylgruppenhaltige Addukte aus einem Hydroxyalkylacrylat oder Hydroxyalkylmethacrylat, die vorzugsweise 1-4 C-Atome in der Alkylgruppe enthalten, mit einem Polycarbonsäureanhydrid, wie Maleinsäure-, Bernsteinsäure-, Tetrahydrophthalsäure- oder Hexahydrophthalsäureanhydrid.

Geeignete Acrylate, enthaltend durchschnittlich mehr als eine Acryloyloxy- oder Methacryloyloxygruppe im Molekül, sind Ester von Epoxidharzen mit Acryl- oder Methacrylsäure oder mit einem carboxylgruppenhaltigen Addukt eines Hydroxyalkylacrylates oder Hydroxyalkylmethacrylates mit einem zuvor genannten Polycarbonsäureanhydrid und die Reaktionsprodukte eines Hydroxyalkylacrylates oder Hydroxyalkylmethacrylates mit einem isocyanatterminierten Prepolymer, das sich von einem Polyol und einem Polyisocyanat ableitet. Beispiele für Ester von Epoxidharzen sind Acrylsäure- oder Methacrylsäureester mit Epoxidharzen, die im Durchschnitt mehr als eine Glycidylgruppe im Molekül aufweisen, vorzugsweise Polyglycidylether von mehrwertigen Alkoholen, wie Butan-1,4-diol, Neopentylglykol oder Polypropylenglykol, Polyglycidylether von mehrwertigen Phenolen, wie Bisphenol F, Bisphenol A oder ein Novolakharz, ein vorverlängertes Epoxidharz, wie ein mit einem mehrwertigen Alkohol oder Phenol vorverlängerter Polyglycidylether.

Bevorzugt sind Acrylate, die im Molekül durchschnittlich mehr als eine Methacryloyloxygruppe aufweisen, wie Polyacrylsäure- und Polymethacrylsäureester von zweiwertigen oder mehrwertigen Alkoholen, wie Ethylenglykol, 1,2-Propylenglykol, 1,3-Propylenglykol, 1,3-Butanediol, 1,4-Butanediol, Neopentylglykol, 1,6-Hexanediol, Diethylenglykol, Dipropylenglykol, Triethylenglykol, Tripropylenglykol, andere Polyoxyalkylenglykole und Addukte von Ethylenoxid oder Propylenoxid mit mehrwertigen Phenolen, wie Bisphenol F oder Bisphenol A, Ester von dreiwertigen Alkoholen, wie Glycerin, 1,1,1-Trimethylolpropan, Addukte dieser Alkohole mit Ethylenoxid oder Propylenoxid, Tris-2-hydroxyethylisocyanurat und Ester von mehrwertigen Alkoholen mit vier oder mehr als vier Hydroxylgruppen, wie Erythrit, Pentaerythrit, Xylit und Sorbit. Viele dieser Polyacrylate und Polymethacrylate sind im Handel erhältlich. Die nicht im Handel erhältlichen können in einfacher Weise hergestellt werden, in dem man den Alkohol mit Acryl- oder Methacrylsäure oder einem Säurederivat davon, wie Acrylsäurechlorid, nach bekannten Verfahren umsetzt.

Bevorzugte monomere Acrylate (B) sind 2-Hydroxyethylmethacrylat, Tetrahydrofurfurylacrylat, Neopentylglykoldimethacrylat, Isobornylacrylat, Tripropylenglykoldiacrylat, Tripropylenglykoldimethacrylat und Mischungen aus zwei oder mehreren solcher Acrylate.

Die Menge des monomeren Acrylates (B) in den erfindungsgemässen Klebstoffzusammensetzungen beträgt im allgemeinen 1 bis 95 Gew.-%, vorzugsweise 20 bis 80 Gew.-%, bezogen auf die gesamte Zusammensetzung.

Die Mengen der Komponenten (A) und (B) in den erfindungsgemässen Zusammensetzungen werden so ausgewählt, dass diese bei Raumtemperatur lichtdurchlässig ist und die Komponenten (A) und (B) gegenseitig zum Teil unverträglich sind. Die gegenseitige Unverträglichkeit kann beeinflusst werden, indem man beispielsweise den Anteil des Olefingehaltes in Komponente (A) variiert. Hoher Olefingehalt führt im allgemeinen zu einer verminderten Verträglichkeit mit Komponente (B) bei Raumtemperatur.

Die erfindungsgemässe Klebstoffzusammensetzung kann durch Mischen der heissen Schmelzen der Komponenten (A) und (B) hergestellt werden. Vom heissen Schmelzgemisch wird dann ein Film gegossen, der direkt zur Herstellung von Laminaten eingesetzt wird oder in Abwesenheit von Licht für die spätere Verwendung gelagert werden kann.

Bei der Herstellung der erfindungsgemässen Laminate wird die als Zwischenschicht eingesetzte erfindungsgemässe Klebstoffzusammensetzung durch Bestrahlen mit aktinischem Licht photogehärtet. Zur Unterstützung der Photohärtung enthält die Klebstoffzusammensetzung einen Photoinitiator für die Photopolymerisation der Acrylatgruppen. Dafür kann jeder für die Photopolymerisation von Acrylaten bekannte Photoinitiator eingesetzt werden, der im allgemeinen in Mengen von 1 bis 20 Gew.-%, vorzugsweise von 1 bis 10 Gew.-%, bezogen auf die Menge der Acrylate in Komponente (A) und (B), verwendet wird. Beispielsweise kann der Photopolymerisationsinitiator eine aromatische Carbonylverbindung, zum Beispiel ein Benzoin, ein Benzoinalkylether, wie der Isopropyl- oder n-Butylether, ein $\alpha$-substituiertes Acetophenon, beispielsweise ein Benzilketal, wie Benzildimethylketal, ein $\alpha$-Halogenacetophenon, wie Trichlormethyl-p-tert.-butylphenylketon, ein $\alpha$-Aminoacetophenon, wie Dimethylaminomethylphenylketon und Morpholinomethylphenylketon, ein Dialkyloxyacetophenon, wie Diethoxyacetophenon, oder ein α-Hydroxyacetophenon, wie 1-Hydroxycyclohexylphenylketon oder ein Benzophenon, wie Benzophenon selbst und Bis-(4-dimethylamino)-benzophenon, ein Metallocen, wie beispielsweise Titaniummetallocene, wie Bis-(pimethylcyclopentadienyl)-bis-(sigma-pentafluorophenyl)-titanium (IV), metallorganische Verbindungen der Gruppe IVA des Periodensystems, beispielsweise Stannate, wie Tributylbenzylstannat oder Dibutyldibenzylstannat zusammen mit einem die Lichtempfindlichkeit reduzierenden Farbstoff, wie Methylenblau oder Rosabengal, ein Chinon wie Anthrachinon oder Campherchinon zusammen mit einem ein Wasserstoffatom am aliphatischen α-Kohlenstoffatom aufweisenden Amin, vorzugsweise ein tertiäres Amin, wie Bis-(4-dimethylamino)-benzophenon und Triethanolamin, ein Thioxanthon, beispielsweise ein alkyl- oder halogensubstituiertes Thioxanthon, wie 2-Isopropylthioxanthon oder 2-Chlorthioxanthon, ein Acylphosphinoxid oder eine Mischung von zwei oder mehreren der oben angegebenen Initiatoren.

Vorzugsweise ist der Photopolymerisationsinitiator ein α-substituiertes Acetophenon, ein Thioxanthon, ein Metallocen oder eine Mischung von zwei oder mehreren solcher Initiatoren. Insbesondere ist der Initiator ein Benzildialkylketal oder ein α-Hydroxyacetophenon.

Die Zwischenschicht, d.h. der Film, kann ausserdem noch übliche Additive, die in Klebstoffzusammensetzungen verwendet werden, enthalten, beispielsweise ein Polymerisationsinhibitor, wie Hydrochinon oder 2,6-Di-tert.-butyl-4-methylphenol, ein Haftvermittler, wie Silane, Farbstoffe oder Pigmente, polymere Additive, wie Acrylatpolymere und -copolymere, Polyisobutylene, Polyester, Polycarbonate, Polyurethane, Polyvinylformale und Polyvinylbutyrate und Füllstoffe, wie Quarzmehl oder gemahlenes Glas. Jeder verwendete Füllstoff muss genügend strahlendurchlässig sein, so dass die Härtung nicht verhindert wird. Die Auswahl des geeigneten Füllstoffes ist eine Routineangelegenheit für den auf dem Gebiet der Strahlungspolymerisation tätigen Fachmann.

Um ein erfindungsgemässes Laminat herzustellen, wird ein Film aus der erfindungsgemässen Klebstoffzusammensetzung zwischen nebeneinander oder übereinander liegende Substrate gelegt und das Ganze zusammengepresst, damit die Luft aus dem Laminat entfernt wird. Das Harz des Filmes wird dann mit den Substraten durch Bestrahlen mit UV-Licht verbunden.

Substrate, welche mit den erfindungsgemässen Klebstoffzusammensetzungen vorteilhaft gebunden werden können, sind solche aus Glas, Polyvinylchlorid, Polyethylenterephthalat, Polycarbonat oder Polymethylmethacrylat.

In den erfindungsgemässen Laminaten kann auch ein lichtundurchlässiges Substrat vorhanden sein, vorausgesetzt die Bestrahlung wird dann von der Seite des lichtdurchlässigen Substrates vorgenommen. Auf diese Weise können Glas oder Kunststoffe mit Metallen, wie Aluminium oder Stahl, Holz, anderen cellulosehaltigen Materialien oder Keramik verbunden werden.

Mehrlagige Strukturen können ebenfalls hergestellt werden, wenn die Voraussetzung gegeben ist, dass die die Polymerisation bewirkenden Strahlen bis zum polymerisierbaren Harz gelangen.

Eine besondere Ausführungsform vorliegender Erfindung ist die Bereitstellung eines Laminates enthaltend zwei oder mehrere Glasplatten, welche mit der erfindungsgemässen Klebstoffzusammensetzung verbunden sind. Bei Bestrahlung bildet der Klebstoffilm eine Verstärkungszone im Laminat. Solche Glaslaminate widerstehen Schlageinwirkungen. Obgleich das Glas des Laminates infolge mehrerer Schläge mit einem Gegenstand darauf splittert, zerstreut es sich wegen der starken Bindung zur Zwischenschicht nicht, so dass die Form des Gebildes weitgehend erhalten bleibt. Ausserdem verhindert ein solches Glaslaminat, dass der den Schlag auslösende Gegenstand durch das Laminat dringt.

Die folgenden Beispiele sollen die Erfindung näher beschreiben. In den Beispielen werden folgende Polymere eingesetzt.

Polymer I: Copolymer aus Ethylen und 39-40 Gew.-% Vinylacetat mit einem Schmelzindex von 4,8-6,6 g/min und einem Erweichungspunkt von 104°C (ELVAX® 40W der Firma DuPont).

Polymer II: Copolymer aus Ethylen und 20 Gew.-% Acrylsäure (Katalog-Nr. 18,104-8 der Firma Aldrich Chemical).

Polymer III: Copolymer aus Ethylen und 32,8 Gew.-% Vinylacetat mit einem Schmelzindex von 44,0 g/min und einem Erweichungspunkt von 74°C (ELVAX® 140W der Firma DuPont).

Polymer IV: Ein carboxylgruppenhaltiges Terpolymer aus Ethylen, 24-26 Gew.-% Vinylacetat und einer ungesättigten Säure mit einem Schmelzindex von 42,0-58,0 g/min und einem Erweichungspunkt von 83°C (ELVAX® 4310 der Firma DuPont).

Beispiel 1: 200 g Polymer I, 150 g 2-Hydroxyethylmethacrylat und 8 g Benzildimethylketal werden auf 130°C erhitzt, gemischt und auf eine Glasplatte der Abmessung 200x200x3 mm gegossen. Eine zweite Glasplatte der gleichen Grösse wird auf die geschmolzene Masse gepresst, wobei man den Ueberschuss der Masse solange austreten lässt, bis eine 1,5 mm dicke Zwischenschicht erreicht wird. Nach dem Abkühlen können die Glasplatten entfernt werden und man erhält die Zwischenschicht als ein selbsttragendes elastisches Material, das sich leicht feucht anfühlt. Wenn die Polymerschicht erneut zwischen zwei Glasplatten gelegt wird, sieht man, wie die Oberflächen derselben angefeuchtet werden. Nach Bestrahlen mit einer 5000 W Metallhalogenlampe während 2 Minuten aus einer Distanz von 30 cm wird eine starke Verklebung erhalten.

Beispiel 2: Ein Teil der in Beispiel 1 hergestellten 1,5 cm dicken Polymerschicht wird so zurechtgeschnitten, dass zwei Stücke der Abmessung 100x25x0,75 mm aus nicht-plastifiziertem Polyvinylchlorid verklebt werden können. Nach der Bestrahlung mit einer 5000 W Metallhalogenlampe während 1 Minute aus einer Distanz von 30 cm wird eine starke Verklebung erhalten, zu deren Auflösung eine Kraft von 7 N/mm erforderlich ist.

Beispiel 3: Beispiel 1 wird wiederholt, wobei diesmal die Glasplatten nicht entfernt werden. Das so erhaltene Laminat wird mit einer 5000 W Metallhalogenlampe aus einer Distanz von 30 cm bestrahlt. Mit dem verklebten Laminat wird der Schlagtest durchgeführt, wobei man eine 250 g schwere Stahlkugel aus einer Höhe von 4,5 m auf das Laminat aufprallen lässt. Obwohl das Glas splittert, sind alle Glassplitter mit der polymeren Zwischenschicht verklebt und die Form des Teststückes ist im wesentlichen die gleiche. Die Stahlkugel hat das Laminat nicht durchdrungen, wofür 12 solcher Aufpralle erforderlich sind. Dagegen ist ein durch Schmelzverklebung mit plastifiziertem Polyvinylbutyral hergestelltes Standard-Glaslaminat bereits nach 8 solcher Aufpralle durchdrungen.

Beispiel 4: Es wird wie in Beispiel 1 gearbeitet, wobei eine Mischung aus 200 g Polymer I, 100 g Tetrahydrofurfurylacetat, 60 g N-Vinylpyrrolidon, 20 g Neopentylglykoldimethacrylat und 8 g Benzildimethylketal eingesetzt wird. Ein Stück der erhaltenen Polymerschicht wird wie in Beispiel 2 zum Verkleben von nichtplastifiziertem Polyvinylchlorid verwendet. Um die erhaltene Verklebung zu lösen, bedarf es einer Kraft von 6,5 N/mm$^2$.

Beispiel 5: Eine Mischung aus 2 g Polymer I, 1 g 2-Hydroxyethylmethacrylat, 5 g 2-Ethylhexylacrylat und 0,08 g Benzildimethylketal wird durch Zusammenschmelzen der Komponenten bei 130°C hergestellt. Durch Vergiessen dieser Schmelze zwischen zwei Glasplatten der Abmessung 75x25x1 mm wird ein 1 mm dicker Film erhalten. Nach Kühlung auf 21 °C können die Glasplatten leicht entfernt werden. Wird der Film zwischen zwei neue Glasplatten eingelegt, so beobachtet man, dass sich die Glasoberflächen beschlagen. Nach Bestrahlen aus 1 cm Entfernung mit einer 4 W UV-Lampe erhält man eine starke Verklebung, so dass die Glasplatten nicht mehr entfernt werden können. Wenn man mit dem Hammer auf das Laminat schlägt, splittert zwar das Glas, doch alle Scherben bleiben mit der Polymerschicht verbunden und die Form des Laminates bleibt im wesentlichen erhalten.

Beispiel 6: Beispiel 5 wird wiederholt, wobei eine Mischung aus 2 g Polymer I, 0,75 g 2-Hydroxyethylmethacrylat, 0,75 g Tripropylenglykoldimethacrylat und 0,08 g Benzildimethylketal eingesetzt wird. Bei einem Schlag mit dem Hammer splittert zwar das Laminat, doch bleiben die Glasscheiben auf der Polymerschicht gut haften, so dass die Form des Laminats erhalten bleibt.

Beispiel 7: Beispiel 5 wird wiederholt, wobei eine Mischung aus 2 g Polymer I, 0,75 g 2-Hydroxyethylmethacrylat, 0,75 g Glycidylmethacrylat und 0,08 g Benzildimethylketal eingesetzt wird. Das erhaltene klare Laminat behält seine Form nach einem Schlag mit dem Hammer im wesentlichen bei, und die Glasscheiben bleiben mit der Polymerschicht gut verbunden.

Beispiel 8: Der in Beispiel 1 hergestellte Film wird zum Verkleben von plastifiziertem PVC (UIBAK UB241 der Firma Wardley Storeys, PLC, GB) der Abmessung 100x25x3 verwendet. Nach 20 minütigem Bestrahlen mit Sonnenlicht wird eine so starke Verklebung erhalten, dass das flexible PVC bis zu einem Ausmass von 100 % gedehnt werden kann, ohne die Klebfestigkeit zu verlieren.

Beispiel 9: Beispiel 5 wird wiederholt, wobei eine Mischung aus 1 g Polymer I, 1 g Polymer II, 1,5 g 2-Hydroxyethylmethacrylat und 0,08 g Benzildimethylketal verwendet wird. Das erhaltene klare Laminat behält seine Form nach einem Schlag mit dem Hammer im wesentlichen bei, und die Glassplitter bleiben mit der Polymerschicht fest verbunden.

Beispiel 10: Beispiel 2 wird wiederholt, wobei eine Mischung aus 200 g Polymer I, 150 g Tripropylenglykoldiacrylat und 8 g 1-Hydroxycyclohexylphenylketon eingesetzt wird. An dem erhaltenen klaren Laminat wird die Schlagfestigkeit geprüft, in dem man auf dieses aus 4,5 Meter Höhe eine 250 g Stahlkugel aufprallen lässt. Dabei wird keine Durchdringung des Laminates erhalten, das seine Form im wesentlichen beibehäält, da die Glassplitter fest mit der Polymerschicht verbunden sind.

Beispiel 10: Beispiel 2 wird wiederholt, wobei eine Mischung aus 150 g Polymer III, 150 g 2-Hydroxyethylmethacrylat, 40 g Isobomylacrylat und 8 g Benzildimethylketal verwendet wird. Das erhaltene klare Laminat widersteht einem Schlag in gleicher Weise wie in den vorhergehenden Beispielen.

Beispiel 12: Beispiel 2 wird wiederholt, wobei eine Mischung aus 200 g Polymer IV, 150 g Isobomylacrylat und 8 g Benzildimethylketal verwendet wird. Das erhaltene klare Laminat widersteht einem Schlag in gleicher Weise wie in den vorhergehenden Beispielen.

**Patentansprüche**

1. Klebstoffzusammensetzung, geeignet zum Verkleben von zwei oder mehreren Substraten, von denen mindestens eines für UV-Strahlen durchlässig ist, enthaltend

(A) ein filmbildendes Copolymer aus einem Olefin und einem polaren Monomer,

(B) ein photopolymerisierbares monomeres Acrylat und

(C) einen Photoinitiator für die Acrylatgruppen,

wobei die Zusammensetzung lichtdurchlässig ist und sich durch teilweise Unverträglichkeit zwischen den Komponenten (A) und (B) auszeichnet.

2. Zusammensetzung gemäss Anspruch 1, worin das Copolymer (A) aus einem linearen oder verzweigten $C_2$-$C_4$-Olefin und einem polaren Monomer besteht.

3. Zusammensetzung gemäss Anspruch 2, worin das Olefin im Copolymer (A) Ethylen ist.

4. Zusammensetzung gemäss Anspruch 1, worin das polare Monomer im Copolymer (A) Vinylacetat, Acrylsäure oder ein Alkylester der Acrylsäure ist.

5. Zusammensetzung gemäss Anspruch 1, worin im Copolymer (A) das Verhältnis von Olefin zu polarem Monomer 95:5 bis 20:80 Gewichtsteile beträgt.

6. Zusammensetzung gemäss Anspruch 1, worin das Copolymer (A) ein Ethylen/Vinylacetat-Copolymer, ein Ethylen/Ethylacrylat-Copolymer oder ein Terpolymer aus Ethylene, Vinylacetat und Acrylsäure ist.

7. Zusammensetzung gemäss Anspruch 1, worin das photopolymerisierbare Acrylat (B) ein Monoacrylat enthaltend eine Acryloyloxy- oder Methacryloyloxygruppe und eine Hydroxyl- oder Carboxylgruppe, ein Acrylat enthaltend durchschnittlich mehr als eine Acryloyloxy- oder Methacryloyloxygruppe im Molekül oder ein Gemisch aus zwei oder mehreren solcher Acrylate.

8. Zusammensetzung gemäss Anspruch 7, worin das monomere Acrylat (B) ein Hydroxyalkylacrylat oder -methacrylat, ein Carboxyalkylacrylat oder -methacrylat oder ein Carboxygruppen haltiges Addukt, aus einem Hydroxyalkylacrylat oder -methacrylat und einem Polycarbonsäureanhydrid ist.

9. Zusammensetzung gemäss Anspruch 8, worin das Hydroxyalkylacrylat oder -methacrylat das 2-Hydroxyethylacrylat, 2-Hydroxypropylacrylat, 3-Hydroxypropylacrylat oder 4-Hydroxybutylacrylat, das entsprechende Methacrylat oder ein Gemisch aus zwei oder mehreren solcher Acrylate ist.

10. Zusammensetzung gemäss Anspruch 8, worin das Carboxyalkylacrylat oder -methacrylat das 2-Carboxyethylacrylat oder 2-Carboxy-2-methylethyl-methacrylat ist.

11. Zusammensetzung gemäss Anspruch 8, worin das Polycarbonsäureanhydrid im carboxylgruppenhaltigen Addukt Maleinsäure-, Bemsteinsäure-, Tetrahydrophthalsäure- oder Hexahydrophthalsäureanhydrid ist.

12. Zusammensetzung gemäss Anspruch 7, worin das Acrylat mit durchschnittlich mehr als einer Acryloyloxy- oder Methacryloyloxygruppe ein Polyacrylat- oder Polymethacrylatester eines mehrwertigen Alkohols ist.

13. Zusammensetzung gemäss Anspruch 1, worin die Menge der Komponenten (A) und (B) je 1 bis 95 Gew.-%, bezogen auf die gesamte Zusammensetzung, beträgt.

14. Zusammensetzung gemäss Anspruch 1, worin die Menge des Photoinitiators (C) 0,1 bis 20 Gew.-%, bezogen auf die Menge der Acrylate im Komponente (A) und (B), beträgt.

15. Zusammensetzung gemäss Anspruch 1, worin der Photoinitiator ein α-substituiertes Acetophenon, ein Thioxanthon, ein Metallocen oder ein Gemisch aus zwei oder mehreren solcher Photoinitiatoren ist.

16. Laminat aus zwei oder mehreren Substraten, enthaltend zwischen den übereinander oder nebeneinander liegenden Substraten eine Schicht einer Klebstoffzusammensetzung gemäss Anspruch 1.

17. Laminat gemäss Anspruch 16, worin das Substrat aus Glas, Polyvinylchlorid, Poly(ethylenterephthalat), Polycarbonat oder Poly(methylmethacrylat) besteht.

18. Laminat gemäss Anspruch 16, enthaltend UV-durchlässige und UV-undurchlässige Substrate.

19. Laminat gemäss Anspruch 16, worin das Substrat aus zwei oder mehreren Glasplatten besteht.

20. Laminat aus zwei oder mehreren Substraten, enthaltend zwischen den übereinander oder nebeneinander liegenden Substraten eine durch Bestrahlung mit UV-Licht photopolymerisierte Klebstoffzusammensetzung gemäss Anspruch 1.

**Patentanspruch für folgenden Vertragsstaat: ES**

1. Klebstoffzusammensetzung, geeignet zum Verkleben von zwei oder mehreren Substraten, von denen mindestens eines für UV-Strahlen durchlässig ist, enthaltend
   (A) ein filmbildendes Copolymer aus einem Olefin und einem polaren Monomer,
   (B) ein photopolymerisierbares monomeres Acrylat und
   (C) einen Photoinitiator für die Acrylatgruppen,
   wobei die Zusammensetzung lichtdurchlässig ist und sich durch teilweise Unverträglichkeit zwischen den Komponenten (A) und (B) auszeichnet.

2. Zusammensetzung gemäss Anspruch 1, worin das Copolymer (A) aus einem linearen oder verzweigten $C_2$-$C_4$-Olefin und einem polaren Monomer besteht.

3. Zusammensetzung gemäss Anspruch 2, worin das Olefin im Copolymer (A) Ethylen ist.

4. Zusammensetzung gemäss Anspruch 1, worin das polare Monomer im Copolymer (A) Vinylacetat, Acrylsäure oder ein Alkylester der Acrylsäure ist.

5. Zusammensetzung gemäss Anspruch 1, worin im Copolymer (A) das Verhältnis von Olefin zu polarem Monomer 95:5 bis 20:80 Gewichtsteile beträgt.

6. Zusammensetzung gemäss Anspruch 1, worin das Copolymer (A) ein Ethylen/Vinylacetat-Copolymer, ein Ethylen/Ethylacrylat-Copolymer oder ein Terpolymer aus Ethylene, Vinylacetat und Acrylsäure ist.

7. Zusammensetzung gemäss Anspruch 1, worin das photopolymerisierbare Acrylat (B) ein Monoacrylat enthaltend eine Acryloyloxy- oder Methacryloyloxygruppe und eine Hydroxyl- oder Carboxylgruppe, ein Acrylat enthaltend durchschnittlich mehr als eine Acryloyloxy- oder Methacryloyloxygruppe im Molekül oder ein Gemisch aus zwei oder mehreren solcher Acrylate.

8. Zusammensetzung gemäss Anspruch 7, worin das monomere Acrylat (B) ein Hydroxyalkylacrylat oder -methacrylat, ein Carboxyalkylacrylat oder -methacrylat oder ein Carboxygruppen haltiges Addukt, aus einem Hydroxyalkylacrylat oder -methacrylat und einem Polycarbonsäureanhydrid ist.

9. Zusammensetzung gemäss Anspruch 8, worin das Hydroxyalkylacrylat oder -methacrylat das 2-Hydroxyethylacrylat, 2-Hydroxypropylacrylat, 3-Hydroxypropylacrylat oder 4-Hydroxybutylacrylat, das entsprechende Methacrylat oder ein Gemisch aus zwei oder mehreren solcher Acrylate ist.

10. Zusammensetzung gemäss Anspruch 8, worin das Carboxyalkylacrylat oder -methacrylat das 2-Carboxyethylacrylat oder 2-Carboxy-2-methylethyl-methacrylat ist.

11. Zusammensetzung gemäss Anspruch 8, worin das Polycarbonsäureanhydrid im carboxylgruppenhaltigen Addukt Maleinsäure-, Bernsteinsäure-, Tetrahydrophthalsäure- oder Hexahydrophthalsäureanhydrid ist.

12. Zusammensetzung gemäss Anspruch 7, worin das Acrylat mit durchschnittlich mehr als einer Acryloyloxy- oder Methacryloyloxygruppe ein Polyacrylat- oder Polymethacrylatester eines mehrwertigen Alkohols ist.

13. Zusammensetzung gemäss Anspruch 1, worin die Menge der Komponenten (A) und (B) je 1 bis 95 Gew.-%, bezogen auf die gesamte Zusammensetzung, beträgt.

14. Zusammensetzung gemäss Anspruch 1, worin die Menge des Photoinitiators (C) 0,1 bis 20 Gew.-%, bezogen auf die Menge der Acrylate im Komponente (A) und (B), beträgt.

15. Zusammensetzung gemäss Anspruch 1, worin der Photoinitiator ein α-substituiertes Acetophenon, ein Thioxanthon, ein Metallocen oder ein Gemisch aus zwei oder mehreren solcher Photoinitiatoren ist.

| Europäisches Patentamt | **EUROPÄISCHER RECHERCHENBERICHT** | Nummer der Anmeldung |
|---|---|---|
| | | EP  91 81 0172 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 591 618  (K. NAITO et al.)<br>* Beispiele; Patentansprüche *<br>--- | 1-7 | C 09 J 133/00<br>C 09 J 123/04 |
| Y | EP-A-0 160 510  (BRIDGESTONE CORP.)<br>* Seite 8, Zeilen 7-23; Patentansprüche 3,4 *<br>--- | 1-7 | |
| A | FR-A-2 289 587  (MPB CORP.)<br>* Beispiel 1; Patentansprüche 1-3 *<br>----- | 1 | |
| | | | **RECHERCHIERTE SACHGEBIETE (Int. Cl.5)** |
| | | | C 09 J |

Der vorliegende Recherchenbericht wurde für alle Patentansprüche erstellt

| Recherchenort | Abschlußdatum der Recherche | Prüfer |
|---|---|---|
| DEN HAAG | 25-06-1991 | GLIKMAN J-F.M. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)